# EUROPEAN PATENT SPECIFICATION

(11) **EP 4 481 552 B1**
(45) Date of publication and mention of the grant of the patent: **28.10.2026**
(21) Application number: 24211859.4
(22) Date of filing: 06.02.2019
(51) Int. Cl.: G06F 3/16, G06F 40/58, H04M 1/60, G10L 25/87

(54) **CONCURRENT RECEPTION OF MULTIPLE USER SPEECH INPUT FOR TRANSLATION**
GLEICHZEITIGER EMPFANG VON SPRACHEINGABEN MEHRERER BENUTZER ZUR ÜBERSETZUNG
RÉCEPTION SIMULTANÉE D'UNE ENTRÉE VOCALE À UTILISATEURS MULTIPLES POUR TRADUCTION

(30) Priority: 09.02.2018 US 201862628421 P
(43) Date of publication of application: 25.12.2024
(62) Document number(s) of the earlier application(s) in accordance with Art. 76 EPC: 19707534.4 / 3 721 337
(73) Proprietor: GOOGLE LLC, Mountain View CA 94043 (US)
(72) Inventor: CHENG, Deric, Mountain View, California, 94043 (US)
(74) Representative: Maikowski & Ninnemann Patentanwälte Partnerschaft mbB

(56) References cited:
- WO-A1-2016/050298
- WO-A2-2007/080517
- US-A1- 2002 198 704
- US-A1- 2011 301 952
- US-A1- 2015 058 023
- US-A1- 2015 134 320
- US-A1- 2015 134 322
- US-A1- 2017 286 407

## Description

### CROSS-REFERENCE TO RELATED APPLICATIONS

The present application claims the benefit of the filing date of U.S. Provisional Patent Application No. 62/628,421 filed February 9, 2018.

### BACKGROUND

Mobile computing devices, such as mobile phones, have available auxiliary devices which can offer additional functionality, see, for example, US 2015/058023 A1 and US 2015/134322 A1. For example, some earbuds offer a translation experience where a user can touch one earbud, speak in a first language, and the spoken phrase is translated into a second language. The user may hear the translated phrase, for example, from speakers in the mobile computing device. Similarly, phrases spoken into the mobile phone in the second language may be translated to the first language and output through the earbuds. This exchange is performed serially, such that each participant must wait for the other's speech to be completed, translated, and output through speakers of the mobile computing device or auxiliary device before speaking a response. The serial nature of the exchange adds significant delays to conversational patterns, and introduces uncomfortable social cues. The interaction flow requires both parties to pay careful attention to which person is speaking, whether the translation is being output on each device, and as a result is unintuitive.

### BRIEF SUMMARY

The proposed solution relates to a mobile computing device of claim 1, a non-transitory computer readable medium of claim 8, a mobile device of claim 9, and a system of claim 10.

The present disclosure provides for a more natural, conversational exchange between a user and a foreign language speaker using translation features of mobile devices and auxiliary devices. In particular, microphones of both the mobile device and the auxiliary device are always listening for speech input. The mobile and auxiliary device may also determine whether the speech input is from the user or the foreign language speaker. The mobile device and auxiliary device can automatically determine when a spoken phrase is complete and ready for translation, send the spoken phrase for translation, and immediately begin listening again. In this regard, acknowledgements or other social cues, such as "OK," "Yes," "Oh no," etc. may be captured, translated, and output throughout a conversation in response to the other user's translated speech, even if the other user is still speaking.

### BRIEF DESCRIPTION OF THE DRAWINGS

Fig. 1 is a pictorial diagram of an example system in use by two users according to aspects of the disclosure.
Fig. 2 is pictorial diagram of the example system of Fig. 1.
Fig. 3 is a block diagram illustrating components of the example system of Fig. 1.
Fig. 4 is a flow diagram illustrating an example method in accordance with aspects of the disclosure.
Fig. 5 is a flow diagram illustrating another example method in accordance with aspects of the disclosure.

### DETAILED DESCRIPTION

The present disclosure provides for an improved translation experience between a first user and a second user using a mobile computing device and an auxiliary device, such as a pair of earbuds. The first user is a foreign language speaker, and the second user is the user or owner of the mobile computing device and auxiliary device. Microphones on both the mobile device and the auxiliary device simultaneously capture input from the first user and the second user, respectively, rather than alternating between the mobile device and the auxiliary device. Each device may determine when to endpoint, or send a block of speech for translation, for example based on pauses in the speech. Each device may accordingly send the received speech up to the endpoint for translation and output, such that it is provided in a natural flow of communication. Listening by the microphones automatically resumes immediately after endpointing, and therefore speech will not be lost.

### Example Systems

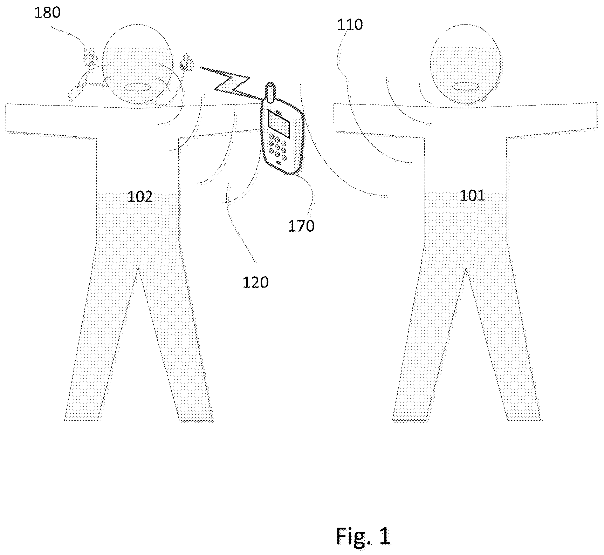

Fig. 1 is a pictorial diagram of an example system in use. A first user 101 provides speech input 110. The speech input 110 is in a language foreign to a second user 102. The speech input 110 is received at a mobile computing device 170 of the second user 102. The second user 102 also provides second speech input 120 in a second language. The second speech input 120 may be received by both the mobile device 170 and by an auxiliary device 180 worn by the second user 102. According to some examples, the auxiliary device 180 may be intended to primarily receive the second speech input 120, while the mobile device 170 is intended to primarily receive the first speech input 110. However, even in this example, the mobile device 170 may also pick up some of the second speech input 120 as a side effect, and may filter out the second speech input 120. For example, the mobile device 170 may determine which input is received from the first user 101 and which input is received from the second user 102, and translate the speech from the first user 101. The auxiliary device 180 may also determine that received input is from the second user 102, and send that input to the mobile device for translation. Each of the mobile device 170 and the auxiliary device 180 remains listening throughout an exchange between the first user 101 and the second user 102, and provides translated output at times relevant to one another.

In the example shown, the auxiliary device 180 is a pair of wireless earbuds. However, it should be understood that the auxiliary device 180 may be any of a number of different types of auxiliary devices. For example, the auxiliary device 180 may be a pair of wired earbuds, a headset, a head-mounted display, a smart watch, a mobile assistant, etc.

The mobile computing device 170 may be, for example, a mobile phone, tablet, laptop, gaming system, or any other type of mobile computing device. In some examples, the mobile computing device 170 may be coupled to a network, such as a cellular network, wireless Internet network, etc. Translations capabilities may be stored on the mobile computing device 170, or accessed from a remote source by the mobile computing device 170. For example, the mobile device 170 may interface with a cloud computing environment in which the speech translations from a first language to a second language are performed and provided back to the mobile device 170.

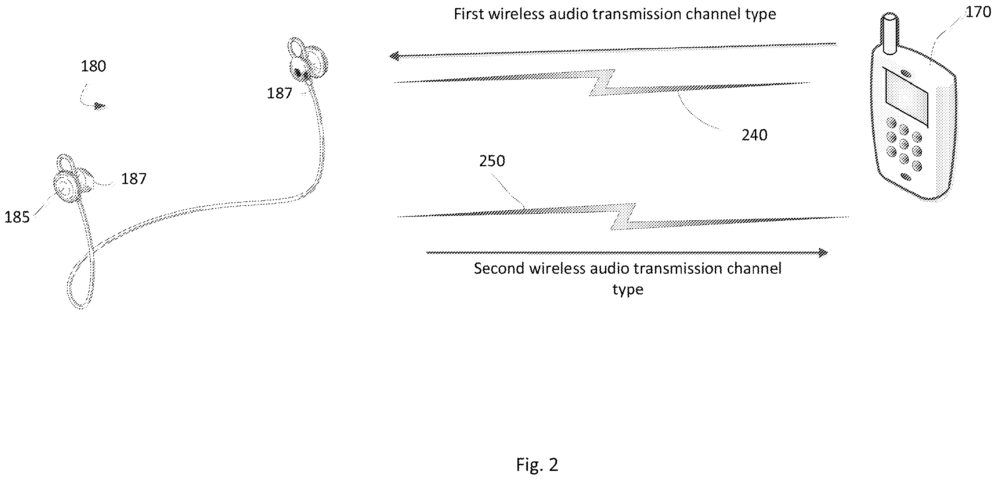

Fig. 2 is pictorial diagram of the example system including auxiliary device 180 and mobile device 170, and illustrates an exchange of signals between the mobile device 170 and the auxiliary device 180.

In this example, the auxiliary device 180 is illustrated as a pair of earbuds, which may include, for example, speaker portion 187 adjacent an inner ear-engaging surface 188, and input portion 185 adjacent an outer surface. In some examples, a user may enter input by pressing the input portion 185 while speaking, or by tapping the input portion 185 prior to speaking. In other examples, manual input by a user is not required, and the user may simply begin speaking. The user's speech may be received by a microphone in the earbuds (not shown) or in the mobile device 170. The user may hear translated speech from another person through the speaker portion 187.

The auxiliary device 180 is wirelessly coupled to the mobile device 170. The wireless connections between the devices may include, for example, a short range pairing connection, such as Bluetooth. Other types of wireless connections are also possible.

In some examples, such as shown in Fig. 2, different wireless protocols may be used for transmission of information from the earbuds 180 to the mobile device 170, than for transmission of information in a reverse path from the mobile device 170 to the earbuds 180. Wireless pairing between mobile and auxiliary devices may typically use an HFP/SCO channel, which provides for lower quality two-way communication. The present example provides for replacing the HFP/SCO channel with two concurrent channels. In some examples, the concurrent channels may be of different types. A first channel 240, used for transmitting information from the mobile device 170 to the auxiliary device 180, may be a high quality one-way audio channel, such as A2DP. A second channel 250, used for transmitting information from the auxiliary device 180 to the mobile device 170, may be, for example, an RFComm channel. This allows for the mobile device 170 to process two streams of input audio at once. In this regard, microphones on both the mobile device 170 and auxiliary device 180 may be used concurrently, with audio transmitted simultaneously in both directions. It should be understood that A2DP and RFComm are merely examples of the different types of channels that can be used. Moreover, in some examples the channels 240, 250 may be independent channels of a same type, each providing one-way communication.

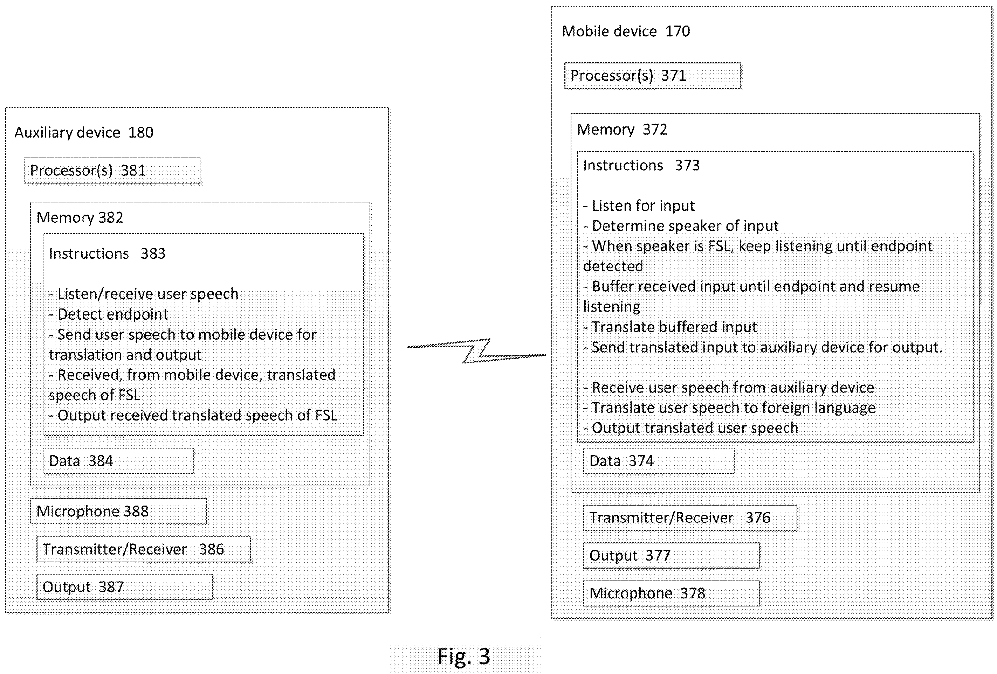

Fig. 3 provides an example block diagram of the auxiliary device 180 and the mobile device 170. Each device includes one or more processors 371, 381, memory 372, 382, and other components typically present in mobile computing devices and auxiliary devices. While a number of components are shown, it should be understood that such components are merely non-limiting examples, and that other components may additionally or alternatively be included.

As mentioned above, the auxiliary device 180 can be any of various types of devices, such as earbuds, head-mounted device, smart watch, etc. The mobile device 170 can also take a variety of forms, such as smart phone, tablet, laptop, game console, etc.

The one or more processors 371, 381 may be any conventional processors, such as commercially available microprocessors. Alternatively, the one or more processors may be a dedicated device such as an application specific integrated circuit (ASIC) or other hardware-based processor. Although Fig. 3 functionally illustrates the processor, memory, and other elements of auxiliary device 180 and mobile computing device 170 as being within the same respective blocks, it will be understood by those of ordinary skill in the art that the processor or memory may actually include multiple processors or memories that may or may not be stored within the same physical housing. Similarly, the memory may be a hard drive or other storage media located in a housing different from that of the auxiliary device 180 or mobile computing device 170. Accordingly, references to a processor or computing device will be understood to include references to a collection of processors or computing devices or memories that may or may not operate in parallel.

Memory 382 may store information that is accessible by the processors 381, including instructions 383 that may be executed by the processors 381, and data 384. The memory 382 may be of a type of memory operative to store information accessible by the processors 381, including a non-transitory computer-readable medium, or other medium that stores data that may be read with the aid of an electronic device, such as a hard-drive, memory card, read-only memory ("ROM"), random access memory ("RAM"), optical disks, as well as other write-capable and read-only memories. The subject matter disclosed herein may include different combinations of the foregoing, whereby different portions of the instructions 383 and data 384 are stored on different types of media.

Data 384 may be retrieved, stored or modified by processors 381 in accordance with the instructions 383. For instance, although the present disclosure is not limited by a particular data structure, the data 384 may be stored in computer registers, in a relational database as a table having a plurality of different fields and records, XML documents, or flat files. The data 384 may also be formatted in a computer-readable format such as, but not limited to, binary values, ASCII or Unicode. By further way of example only, the data 384 may be stored as bitmaps comprised of pixels that are stored in compressed or uncompressed, or various image formats (e.g., JPEG), vector-based formats (e.g., SVG) or computer instructions for drawing graphics. Moreover, the data 384 may comprise information sufficient to identify the relevant information, such as numbers, descriptive text, proprietary codes, pointers, references to data stored in other memories (including other network locations) or information that is used by a function to calculate the relevant data.

The instructions 383 may be executed to facilitate translations performed by a mobile computing device. For example, the instructions 383 provide for listening for and receiving user speech, for example, through microphone 388. The microphone 388 may be beamformed, such that it is directed to receive audio coming from a direction of the user's mouth. In this regard, the auxiliary device 180 may recognize received speech as being that of the user, as opposed to a foreign language speaker that is not wearing the auxiliary device 180.

The instructions 383 may further provide for detecting an endpoint in the received speech. For example, the endpoint may be automatically determined based on a pause in speech, key words, intonation, inflection, or any of a combination of these or other factors. Once the endpoint is detected, the auxiliary device 180 may buffer the received speech while immediately resuming listening. In other examples, alternatively or additionally to buffering, the auxiliary device 180 transmits the received speech to the mobile device 170 for translation. For example, the auxiliary device 180 may transmit the speech via an RFComm or other communication link, as discussed above in connection with Fig. 2. In some examples, all endpointing may be performed by the mobile device 170. In such examples, the auxiliary device 180 may stream all audio to the mobile device 170, which handles all endpointing, voice recognition, and translation, either offline or online.

While the auxiliary device 180 is executing the instructions 383, the mobile device 170 is executing instructions 373 stored in memory 372 along with data 374. For example, similar to the auxiliary device 180, the mobile device 170 may also include memory 372 storing data 374 and instructions 373 executable by the one or more processors 371. The memory 372 may be any of a variety of types, and the data 374 may be any of a variety of formats, similar to the memory 382 and data 384 of the auxiliary device 180. While the auxiliary device 180 is listening for and receiving speech from the user wearing the auxiliary device 180, the mobile device 170 is listening for and receiving speech as well through microphone 378. The microphone 378 may not be beamformed, and may receive audio input from both the foreign language speaker (e.g., first user 101 of Fig. 1) and the user of the auxiliary device 180 (e.g., second user 102 of Fig. 1). Accordingly, the instructions 373 provide for determining which user is providing speech input, such that some speech input (at least from the first user, i.e. the foreign language speaker) is translated for output through the auxiliary device 180 and other speech input (e.g., from the second user) can be filtered.

The mobile device 170 is configured to cross reference a volume level between the auxiliary device microphone 388 and the mobile device microphone 378 and/or to cross-reference a waveform of the further voice input received through a microphone 388 of the auxiliary device with the waveform of the voice input received through a microphone 378 of the mobile device. If the sound received through microphone 388 is quiet and the sounds received through the microphone 378 is loud, then it may be determined that the foreign language speaker is providing speech input. Conversely, if the sounds received through both microphones 388, 378 is loud, then it may be determined that the owner/user is speaking. As another example technique, a voice recognition unit may be used. The voice recognition unit may be trained to recognize a voice of the user/owner of the auxiliary device 180 and mobile device 170. Accordingly, if the voice recognition unit detects the owner's voice (i.e. second user) it may ignore it. Similarly, the voice recognition unit may be trained to detect a language primarily spoken by the owner/user, and may filter out speech detected in that language. As yet another example technique, audio echo cancellation techniques may be used. For example, the mobile device 170 listens to both microphones 388, 378, to detect overlapping audio, and, recognize that the overlapping audio belongs to the owner. The overlapping audio is detected by identifying similar waveforms or patterns of sound input, or detecting similar plosives or transient attacks. In some examples, any combination of the foregoing or other techniques may be used.

When the detected speech is from the foreign language speaker (i.e. first user), the instructions 373 further provide for continued listening until an endpoint is detected. As mentioned above, the endpoint may be detected based on a pause, keyword, inflection, or other factor. The received speech from the foreign language speaker is buffered, and the microphone 378 resumes listening.

The mobile device 170 performs translation of of at least the first user, i.e. for foreign language speaker input received through the microphone 378, preferably as well as owner input received through communication from the auxiliary device 180. Such translations may be performed on the mobile device 170 itself, or may be performed using one or more remote computing devices, such as the cloud. For example, the mobile device 170 may upload speech for translation to a remote computing network which performs the translation, and receive a response including translated speech from the remote computing network. Translations of speech from the first user, i.e. foreign language speaker is provided to the auxiliary device 180 for output through output 387. Translations of speech from the owner may be output through output 377 of mobile device 170. The outputs 377, 387 may each include, for example, one or more speakers adapted to provide audible output. In some examples, the outputs 377, 387 may also include one or more other types, such as displays, tactile feedback, etc.

It should be understood that the auxiliary device 180 and mobile device 170 may each include other components which are not shown, such charging input for the battery, signals processing components, etc. Such components may also be utilized in execution of the instructions 383, 373.

### Example Methods

In addition to the operations described above and illustrated in the figures, various operations will now be described. It should be understood that the following operations do not have to be performed in the precise order described below. Rather, various steps can be handled in a different order or simultaneously, and steps may also be added or omitted.

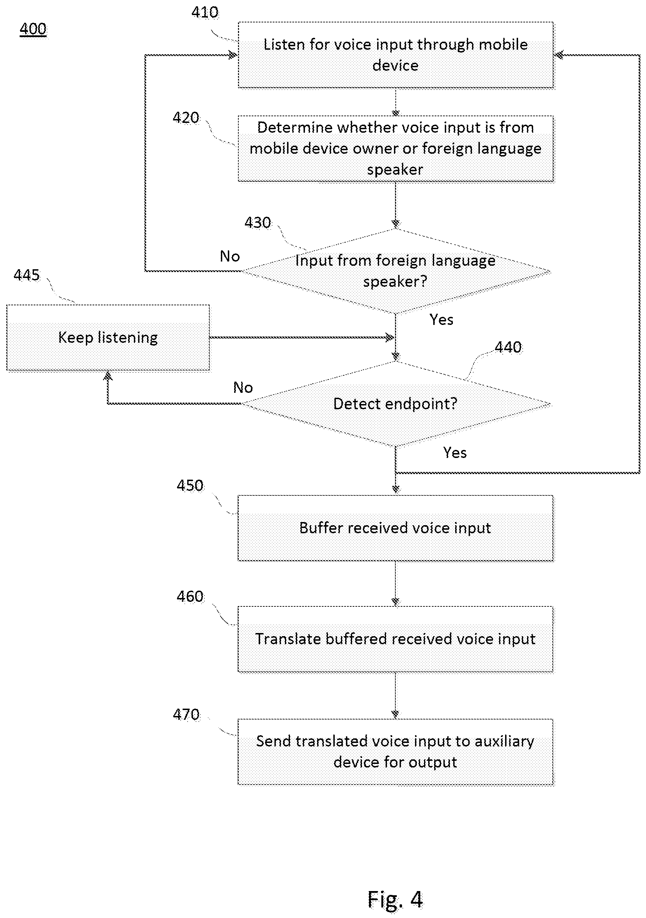

Fig. 4 illustrates a method 400 executed by the mobile device 170. In block 410, the mobile device listens for and receives voice input. While the mobile device is intended to capture the voice of a secondary user, such as a foreign language speaker (e.g., user 101 of Fig. 1), it may also capture voice input of a primary user (e.g., user 102 of Fig. 1). The device may continually listen for and receive input without manual interaction, such as pressing buttons, etc.

In block 420, the mobile device determines whether the received voice input is from the mobile device owner (i.e. second user) or the foreign language speaker (i.e. first user) by using the cross-referencing explained before. For example, the mobile device may use voice recognition, language recognition, etc. As another example, the mobile device may cross reference a volume of sound received at the mobile device with a volume of sound received at the auxiliary device and relayed to the mobile device.

If in block 430 it is determined that the input is from the mobile device owner, the mobile device may ignore the input. Accordingly, the method returns to block 410 to keep listening for input from the foreign language speaker. If, however, the input is determined to be from the foreign language speaker, the method proceeds to block 440.

In block 440, the mobile device determines whether an endpoint in speech is detected. For example, if there is a pause in the speech input for a predetermined period of time, such as half a second, one second, two seconds, etc., the mobile device may determine that an endpoint in speech has been reached. Other examples of detecting endpoints may include detecting changes in intonation or inflection, or detecting keywords. Detecting the endpoint helps to ensure proper translation of complete phrases. For example, translations of each individual word are typically inaccurate. By way of example only, while in English adjectives are typically spoken before their associated nouns, in Spanish the adjectives are spoken after the noun. By endpointing the speech after a complete statement, phrases may be translated as a whole and the words rearranged as appropriate for the translated language.

If no endpoint is detected, the mobile device keeps listening in block 445 and waiting for an endpoint. If an endpoint is detected, however, the mobile device buffers the received input in block 450. It should be understood that the buffering may be performed while the input is received, prior to detection of the endpoint.

In block 460, the mobile device translates the buffered voice input up until the endpoint. The translation may be performed at the mobile device, or through remote computing devices.

In block 470, the translated input is provided to the auxiliary device for output. For example, the translated input may be provided through one of the two communication channels described in Fig. 2.

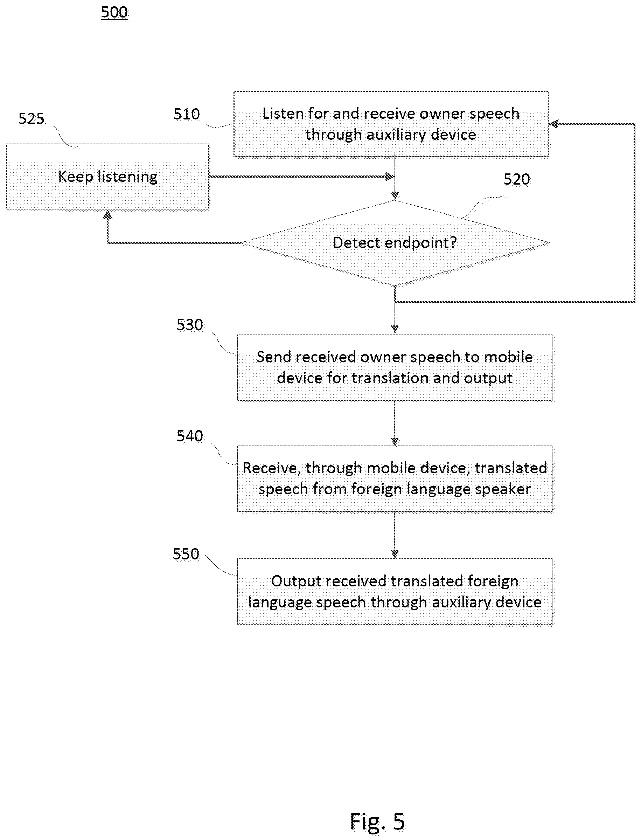

Though not shown, the mobile device also receives speech from the auxiliary device. For example, the auxiliary device receives speech from the owner as described below in connection with Fig. 5, and provides the received speech to the mobile device for translation. Once translated, the mobile device may output the translated speech for the foreign language speaker. For example, the mobile device may emit an audible translation of the speech through a speaker for the foreign language speaker to hear, may provide a text translation of the speech on a display, etc..

Fig. 5 illustrates a method 500 performed by the auxiliary device for receiving translation. The method 500 may be performed by the auxiliary device contemporaneously with execution of the method 400 by the mobile device.

In block 510, the auxiliary device listens for and receives voice input from the owner. Where a microphone in the auxiliary device is beamformed, it may determine that any input received is from the owner. In other examples, voice recognition techniques such as those described above may be used.

In block 520, the auxiliary device determines whether an endpoint was reached. The endpoint may be automatically detected based on patterns in the speech. In other examples, the endpoint may be manually input by the owner, such as by pressing a button. If no endpoint is detected, the device continues listening in block 525 until an endpoint is detected. The received speech may be buffered at the auxiliary device during and/or after receipt. In some alternatives, rather than endpointing being performed by the auxiliary device, the auxiliary device streams the received audio continuously to the mobile device. The mobile device may run two voice recognizers simultaneously in order to detect voice and endpoint accordingly.

In block 530, the received speech from the owner is transmitted to the mobile device for translation and output. For example, the speech may be sent through a second communication channel, as discussed above in connection with Fig. 2. This speech may be sent concurrently with speech received (block 540) from the mobile device for output (block 550) by the auxiliary device.

By keeping microphones on both the auxiliary device and the mobile device continually open, speech from both the owner and the foreign language speaker is continually received. In this regard, the owner and foreign language speaker may have a more natural conversation, including interjections, affirmations, acknowledgements, etc., and without awkward pauses while waiting for translation. By automatic endpointing, phrases or other blocks of speech may be detected and translated without requiring manual input from a user. Moreover, voice recognition techniques may be used to determine which user is providing the input and thus how it should be translated. Accordingly, less user manipulation of devices is required. Rather, the users may converse naturally, and the auxiliary and mobile devices may automatically provide assistance, providing for a near real-time translation.

Unless otherwise stated, the foregoing alternative examples are not mutually exclusive, but may be implemented in various combinations to achieve unique advantages. As these and other variations and combinations of the features discussed above can be utilized within the scope defined by the claims, the foregoing description of the embodiments should be taken by way of illustration rather than by way of limitation of the subject matter defined by the claims. In addition, the provision of the examples described herein, as well as clauses phrased as "such as," "including" and the like, should not be interpreted as limiting the subject matter of the claims to the specific examples; rather, the examples are intended to illustrate only one of many possible embodiments. Further, the same reference numbers in different drawings can identify the same or similar elements.

## Claims

1. A method comprising:
receiving, by a mobile device (170) for providing translations, voice input (110);
determining whether the voice input is from a first user (101) or from a second user (102), wherein the second user is the user of the mobile device;
in response to determining that the voice input is from the first user, determining whether an endpoint in the voice input is detected;
in response to not detecting an endpoint, keep listening and waiting for an endpoint; and
in response to detecting the endpoint in the voice input:
translating, by the mobile device or through remote computing devices, the voice input, that the mobile device buffered until the endpoint, into another language; and
providing the translated voice input for output by an auxiliary device (180),
wherein the determining whether the voice input is from the first user or from the second user of the mobile device (a) is based on cross-referencing a volume level of the voice input received at the mobile device and a volume level of a further voice input received at the auxiliary device and relayed to the mobile device and/or (b) comprises cross-referencing a waveform of the further voice input received through a microphone (388) of the auxiliary device with the waveform of the voice input received through a microphone (378) of the mobile device.

2. The method of claim 1, wherein the detecting the endpoint in the voice input is based on a pause in the voice input.

3. The method of claim 1, wherein the detecting the endpoint in the voice input is based on patterns in the voice input or based on at least one of key words, intonation or inflection.

4. The method of any of claims 1 to 3, wherein the determining whether the voice input is from the first user or from the second user of the mobile device comprises cross-referencing a volume level of the further voice input received through a microphone (388) of the auxiliary device with the volume level of the voice input received through a microphone (378) of the mobile device.

5. The method of claim 1, wherein the auxiliary device and the mobile device are wirelessly coupled using two independent wireless communication channels (240, 250), including a first channel (240) used for transmission from the auxiliary device to the mobile device, and a second channel (250) used for transmission from the mobile device to the auxiliary device.

6. The method of claim 5, wherein the first channel and the second channel are different types.

7. The method of claim 1, wherein:
the mobile device is a mobile phone, a tablet, a laptop, or a gaming system; and
the auxiliary device is a pair of wired or wireless earbuds, a headset, a head-mounted display, or a smart watch.

8. A non-transitory computer-readable storage medium comprising computer program instructions, that when executed by a mobile device, cause the mobile device to perform the steps of any of claims 1 to 7.

9. A mobile device, comprising a mobile device microphone (378) configured to listen for voice input (110), wherein the mobile device is configured to:
receive the voice input;
determine whether the voice input is from a first user (101) or from a second user (102), wherein the second user is the user of of the mobile device (170);
in response to determining that the voice input is from the first user, determining whether an endpoint in the voice input is detected;
in response to not detecting an endpoint, keep listening and waiting for an endpoint; and
in response to detecting the endpoint in the voice input:
translate the voice input, that the mobile device buffered until the endpoint, into another language; and
provide the translated voice input for output by an auxiliary device (180) wirelessly coupled to the mobile device,
wherein the determining whether the voice input is from the first user or from the second user of the mobile device (a) is based on cross-referencing a volume level of the voice input received at the mobile device and a volume level of a further voice input received at the auxiliary device and relayed to the mobile device and/or (b) comprises cross-referencing a waveform of the further voice input received through a microphone (388) of the auxiliary device with the waveform of the voice input received through a microphone (378) of the mobile device.

10. A system for providing translations, comprising:
the mobile device of claim 9, wherein the mobile device is wirelessly coupled to the auxiliary device and configured to continually listen for the voice input from the first user while a microphone of the auxiliary device listens for first voice input from the second user of the mobile device; and
the auxiliary device, wirelessly coupled to the mobile device and comprising the microphone configured to receive first voice input from the second user of the mobile device; and a communication interface adapted to transmit the first voice input to the mobile device.

## Patentansprüche

1. Verfahren, umfassend:
Empfangen von Spracheingabe (110) durch eine mobile Vorrichtung (170) zum Bereitstellen von Übersetzungen;
Bestimmen, ob die Spracheingabe von einem ersten Benutzer (101) oder von einem zweiten Benutzer (102) stammt, wobei der zweite Benutzer der Benutzer der mobilen Vorrichtung ist;
als Reaktion auf das Bestimmen, dass die Spracheingabe von dem ersten Benutzer stammt, Bestimmen, ob ein Endpunkt in der Spracheingabe detektiert wird;
als Reaktion auf das Nichtdetektieren eines Endpunkts, Weiterlauschen und Warten auf einen Endpunkt; und
als Reaktion auf das Detektieren des Endpunkts in der Spracheingabe:
Übersetzen, durch die mobile Vorrichtung oder durch entfernte Rechenvorrichtungen, der Spracheingabe, die die mobile Vorrichtung bis zu dem Endpunkt gepuffert hat, in eine andere Sprache; und
Bereitstellen der übersetzten Spracheingabe zur Ausgabe durch eine Hilfsvorrichtung (180), wobei das Bestimmen, ob die Spracheingabe von dem ersten Benutzer oder von dem zweiten Benutzer der mobilen Vorrichtung stammt, (a) auf einem Kreuzvergleich eines Lautstärkepegels der an der mobilen Vorrichtung empfangenen Spracheingabe und eines Lautstärkepegels einer weiteren Spracheingabe, die an der Hilfsvorrichtung empfangen und an die mobile Vorrichtung weitergeleitet wird, basiert, und/oder (b) ein Kreuzvergleichen einer Wellenform der durch ein Mikrofon (388) der Hilfsvorrichtung empfangenen weiteren Spracheingabe mit der Wellenform der durch ein Mikrofon (378) der mobilen Vorrichtung empfangenen Spracheingabe umfasst.

2. Verfahren nach Anspruch 1, wobei das Detektieren des Endpunkts in der Spracheingabe auf einer Pause in der Spracheingabe basiert.

3. Verfahren nach Anspruch 1, wobei das Detektieren des Endpunkts in der Spracheingabe auf Mustern in der Spracheingabe basiert oder auf mindestens einem von Schlüsselwörtern, Intonation oder Flexion basiert.

4. Verfahren nach einem der Ansprüche 1 bis 3, wobei das Bestimmen, ob die Spracheingabe von dem ersten Benutzer oder von dem zweiten Benutzer der mobilen Vorrichtung stammt, das Kreuzvergleichen eines Lautstärkepegels der durch ein Mikrofon (388) der Hilfsvorrichtung empfangenen weiteren Spracheingabe mit dem Lautstärkepegel der durch ein Mikrofon (378) der mobilen Vorrichtung empfangenen Spracheingabe umfasst.

5. Verfahren nach Anspruch 1, wobei die Hilfsvorrichtung und die mobile Vorrichtung unter Verwendung von zwei unabhängigen drahtlosen Kommunikationskanälen (240, 250) drahtlos gekoppelt sind, beinhaltend einen ersten Kanal (240), der zur Übertragung von der Hilfsvorrichtung an die mobile Vorrichtung verwendet wird, und einen zweiten Kanal (250), der zur Übertragung von der mobilen Vorrichtung an die Hilfsvorrichtung verwendet wird.

6. Verfahren nach Anspruch 5, wobei der erste Kanal und der zweite Kanal unterschiedliche Typen sind.

7. Verfahren nach Anspruch 1, wobei:
die mobile Vorrichtung ein Mobiltelefon, ein Tablet, ein Laptop oder ein Gaming-System ist; und
die Hilfsvorrichtung ein Paar drahtgebundene oder drahtlose Ohrhörer, ein Headset, ein Head-Mounted-Display oder eine Smartwatch ist.

8. Nichtflüchtiges computerlesbares Speichermedium, umfassend Computerprogrammanweisungen, die, wenn sie von einer mobilen Vorrichtung ausgeführt werden, bewirken, dass die mobile Vorrichtung die Schritte nach einem der Ansprüche 1 bis 7 durchführt.

9. Mobile Vorrichtung, umfassend ein Mikrofon (378) einer mobilen Vorrichtung, das konfiguriert ist, auf Spracheingabe (110) zu lauschen, wobei die mobile Vorrichtung für Folgendes konfiguriert ist:
Empfangen der Spracheingabe;
Bestimmen, ob die Spracheingabe von einem ersten Benutzer (101) oder von einem zweiten Benutzer (102) stammt, wobei der zweite Benutzer der Benutzer der mobilen Vorrichtung (170) ist;
als Reaktion auf das Bestimmen, dass die Spracheingabe von dem ersten Benutzer stammt, Bestimmen, ob ein Endpunkt in der Spracheingabe detektiert wird;
als Reaktion auf das Nichtdetektieren eines Endpunkts, Weiterlauschen und Warten auf einen Endpunkt; und
als Reaktion auf das Detektieren des Endpunkts in der Spracheingabe:
Übersetzen der Spracheingabe, die die mobile Vorrichtung bis zu dem Endpunkt gepuffert hat, in eine andere Sprache; und
Bereitstellen der übersetzten Spracheingabe zur Ausgabe durch eine Hilfsvorrichtung (180), die drahtlos mit der mobilen Vorrichtung gekoppelt ist,
wobei das Bestimmen, ob die Spracheingabe von dem ersten Benutzer oder von dem zweiten Benutzer der mobilen Vorrichtung stammt, (a) auf einem Kreuzvergleich eines Lautstärkepegels der an der mobilen Vorrichtung empfangenen Spracheingabe und eines Lautstärkepegels einer weiteren Spracheingabe, die an der Hilfsvorrichtung empfangen und an die mobile Vorrichtung weitergeleitet wird, basiert, und/oder (b) ein Kreuzvergleichen einer Wellenform der durch ein Mikrofon (388) der Hilfsvorrichtung empfangenen weiteren Spracheingabe mit der Wellenform der durch ein Mikrofon (378) der mobilen Vorrichtung empfangenen Spracheingabe umfasst.

10. System zum Bereitstellen von Übersetzungen, umfassend:
die mobile Vorrichtung nach Anspruch 9, wobei die mobile Vorrichtung drahtlos mit der Hilfsvorrichtung gekoppelt und konfiguriert ist, kontinuierlich auf die Spracheingabe von dem ersten Benutzer zu lauschen, während ein Mikrofon der Hilfsvorrichtung auf erste Spracheingabe von dem zweiten Benutzer der mobilen Vorrichtung lauscht; und
die Hilfsvorrichtung, die drahtlos mit der mobilen Vorrichtung gekoppelt ist und das Mikrofon umfasst, das konfiguriert ist, erste Spracheingabe von dem zweiten Benutzer der mobilen Vorrichtung zu empfangen; und eine Kommunikationsschnittstelle, die angepasst ist, die erste Spracheingabe an die mobile Vorrichtung zu übertragen.

## Revendications

1. Procédé comprenant :
la réception, par un dispositif mobile (170) de fourniture de traductions, d'une entrée vocale (110) ;
le fait de déterminer si l'entrée vocale provient d'un premier utilisateur (101) ou d'un second utilisateur (102), dans lequel le second utilisateur est l'utilisateur du dispositif mobile ;
en réponse à la détermination que l'entrée vocale provient du premier utilisateur, le fait de déterminer si un point d'extrémité dans l'entrée vocale est détecté ;
en réponse au fait de ne pas détecter de point d'extrémité, continuer d'écouter et d'attendre un point d'extrémité ; et
en réponse à la détection du point d'extrémité dans l'entrée vocale :
la traduction, par le dispositif mobile ou par l'intermédiaire de dispositifs informatiques distants, de l'entrée vocale, que le dispositif mobile a mise en mémoire tampon jusqu'au point d'extrémité, dans une autre langue ; et
la fourniture de l'entrée vocale traduite pour sortie par un dispositif auxiliaire (180), dans lequel le fait de déterminer si l'entrée vocale provient du premier utilisateur ou du second utilisateur du dispositif mobile (a) est basé sur le référencement croisé d'un niveau de volume de l'entrée vocale reçue au niveau du dispositif mobile et d'un niveau de volume d'une entrée vocale supplémentaire reçue au niveau du dispositif auxiliaire et relayée au dispositif mobile et/ou (b) comprend le référencement croisé d'une forme d'onde de l'entrée vocale supplémentaire reçue par l'intermédiaire d'un microphone (388) du dispositif auxiliaire avec la forme d'onde de l'entrée vocale reçue par l'intermédiaire d'un microphone (378) du dispositif mobile.

2. Procédé selon la revendication 1, dans lequel la détection du point d'extrémité de l'entrée vocale est basée sur une pause dans l'entrée vocale.

3. Procédé selon la revendication 1, dans lequel la détection du point d'extrémité dans l'entrée vocale est basée sur des modèles dans l'entrée vocale ou basée sur au moins l'un des éléments suivants : des mots clés, une intonation ou une inflexion.

4. Procédé selon l'une quelconque des revendications 1 à 3, dans lequel le fait de déterminer si l'entrée vocale provient du premier utilisateur ou du second utilisateur du dispositif mobile comprend le référencement croisé d'un niveau de volume de l'entrée vocale supplémentaire reçue par l'intermédiaire d'un microphone (388) du dispositif auxiliaire avec le niveau de volume de l'entrée vocale reçue par l'intermédiaire d'un microphone (378) du dispositif mobile.

5. Procédé selon la revendication 1, dans lequel le dispositif auxiliaire et le dispositif mobile sont couplés de manière sans fil à l'aide de deux canaux de communication sans fil indépendants (240, 250), comportant un premier canal (240) utilisé pour la transmission du dispositif auxiliaire au dispositif mobile, et un second canal (250) utilisé pour la transmission du dispositif mobile au dispositif auxiliaire.

6. Système selon la revendication 5, dans lequel le premier canal et le second canal sont de types différents.

7. Procédé selon la revendication 1, dans lequel :
le dispositif mobile est un téléphone portable, une tablette, un ordinateur portable ou une console de jeux ; et
le dispositif auxiliaire est une paire d'écouteurs filaires ou sans fil, un casque audio, un écran monté sur la tête ou une montre connectée.

8. Support de stockage non transitoire lisible par ordinateur comprenant des instructions de programme informatique qui, lorsqu'elles sont exécutées par un dispositif mobile, amènent le dispositif mobile à réaliser les étapes selon l'une quelconque des revendications 1 à 7.

9. Dispositif mobile, comprenant un microphone de dispositif mobile (378) configuré pour écouter une entrée vocale (110), dans lequel le dispositif mobile est configuré pour :
recevoir l'entrée vocale ;
déterminer si l'entrée vocale provient d'un premier utilisateur (101) ou d'un second utilisateur (102), dans lequel le second utilisateur est l'utilisateur du dispositif mobile (170) ;
en réponse à la détermination que l'entrée vocale provient du premier utilisateur, le fait de déterminer si un point d'extrémité dans l'entrée vocale est détecté ;
en réponse au fait de ne pas détecter de point d'extrémité, continuer d'écouter et d'attendre un point d'extrémité ; et
en réponse à la détection du point d'extrémité dans l'entrée vocale :
traduire l'entrée vocale, que le dispositif mobile a mise en mémoire tampon jusqu'au point d'extrémité, dans une autre langue ; et
fournir l'entrée vocale traduite pour sortie par un dispositif auxiliaire (180) couplé de manière sans fil au dispositif mobile,
dans lequel le fait de déterminer si l'entrée vocale provient du premier utilisateur ou du second utilisateur du dispositif mobile (a) est basé sur le référencement croisé d'un niveau de volume de l'entrée vocale reçue au niveau du dispositif mobile et d'un niveau de volume d'une entrée vocale supplémentaire reçue au niveau du dispositif auxiliaire et relayée au dispositif mobile et/ou (b) comprend le référencement croisé d'une forme d'onde de l'entrée vocale supplémentaire reçue par l'intermédiaire d'un microphone (388) du dispositif auxiliaire avec la forme d'onde de l'entrée vocale reçue par l'intermédiaire d'un microphone (378) du dispositif mobile.

10. Système de fourniture de traductions, comprenant :
le dispositif mobile selon la revendication 9, dans lequel le dispositif mobile est couplé de manière sans fil au dispositif auxiliaire et configuré pour écouter en permanence l'entrée vocale provenant du premier utilisateur tandis qu'un microphone du dispositif auxiliaire écoute la première entrée vocale provenant du second utilisateur du dispositif mobile ; et
le dispositif auxiliaire couplé de manière sans fil au dispositif mobile et comprenant le microphone configuré pour recevoir la première entrée vocale provenant du second utilisateur du dispositif mobile ; et une interface de communication adaptée pour transmettre la première entrée vocale au dispositif mobile.
